# EUROPEAN PATENT APPLICATION

(11) **EP 3 528 195 A1**
(43) Date of publication of application: **21.08.2019**
(21) Application number: 16918694.7
(22) Date of filing: 12.10.2016
(51) Int. Cl.: G06Q 30/02

(54) **CROSS-BOUNDARY INTERACTIVE MARKETING SYSTEM AND METHOD THEREFOR**

(71) Applicant: Chu, En-Hsin, Taichung City 403 (TW)
(72) Inventor: HUANG, Yu-Tsen, Taichung City 403 (TW); HUANG, Kuan-Wei, Taichung City 403 (TW); CHU, En-Hsin, Taichung City 403 (TW)
(74) Representative: Lang, Christian
(86) International application number: PCT/CN2016/000563
(87) International publication number: WO 2018/068160

(57) **Abstract**

A crossover interactive marketing system is operable to combine the real world with a virtual world. The crossover interactive marketing system includes the internet, a platform provider's server, at least one real customer's portable device and at least one bricks-and-mortar store's terminal device. The server is connected to the portable device and the terminal device via the internet to allow the real customer to find in the real world the marketing event marked in the virtual world to allow the real customer to interact with the bricks-and-mortar store to complete the marketing event in the real world.

## Description

### BACKGROUND OF INVENTION

### 1. FIELD OF INVENTION

The present invention relates to marketing and, more particularly, to a system and method for providing marketing information and instruction in a virtual world to facilitate interaction in the real world.

### 2. RELATED PRIOR ART

There are more and more marketing on the internet due to the growth of technology of the internet. The internet marketing gets more attention in less time than conventional marketing. Accordingly, there are more and more cyber bricks-and-mortar stores to allow real customers to buy products via computers or cell phones without having to leave their homes. However, the internet marketing just provides pictures or brief descriptions of the products for the real customers' review, not allowing the real customers to touch the products or consultbricks-and-mortar store keepers. The internet shopping providesless fun than real-world shopping. Moreover, transaction of food or drinks is still donemainly in bricks-and-mortar stores such as restaurants, cafes, convenience bricks-and-mortar stores orsupermarkets. Hence, the cyber bricks-and-mortar stores cannot replace the bricks-and-mortar stores, which are still the mainstream bricks-and-mortar stores.

As mentioned above, the internet marketing provides convenience for the real customers. However, there are inevitably times when the internet marketing fails to appeal to the real customers for not providing enough fun or access to the products. In such cases, the internet marketing cannot bring the real customers to the bricks-and-mortar stores when the corresponding cyber stores fail to satisfy the real customers. The effects of advertisement are not satisfactory, particularly for start-ups that include bricks-and-mortar stores and cyber stores. Moreover, the internet marketing cannot divide and redirect the real customers so that some popular ones of the bricks-and-mortar stores get too many real customers for them to serve properly.

The present invention is therefore intended to obviate or at least alleviate the problems encountered in prior art.

### SUMMARY OF INVENTION

It is an objective of the present invention to provide a crossover interactive marketing system operable to mark at least one marketing event in at least one virtual store and instruct at least onereal customer to use a portable device to reach a correspondingbricks-and-mortar store via positioning technology and interact with the bricks-and-mortar store.

To achieve the foregoing objective, the crossover interactive marketing system includes a network, a platform provider's server, at least onereal customer's portable device and at least onebricks-and-mortar store's terminal device. The platform provider's server includes a marketing processing module and a communication module. The marketing processing moduleis a back-stage program for processing data and executing functions. The communication module is connected to the network. The serveris connected to areal customer database for recording identity data of at least one real customer, a store database for recording identity data of at least one bricks-and-mortar store and amarketing database for recording at least one marketing event. The portable device includes a marketing operation module, a wireless web communication module, a wireless broadcast module and a positioning module. The marketing operation moduleis an application program for executing functions and showing a virtual world. The wireless broadcast module is operable for interacting with the bricks-and-mortar storeto complete the marketing event. The positioning module is operable to position the real customer in the real world. The wireless web communication module is operable to communicate data with the server via the network. Theterminal device includesa marketing interaction module, a web communication module and a wireless broadcast module. The marketing interaction moduleis an application program for executing functions and showing the virtual world. The wireless broadcast module is operable to interact with the real customerto complete the marketing event. The web communication module is operable to communicate data with the server via the network by cables or in a wireless manner. The server is connected to the portable device and the terminal device via the networkto allow the real customer to find in the real world the marketing event marked in the virtual world to allow the real customerto interact with the bricks-and-mortar store to complete the marketing event in the real world.

It is another objective of the present invention to providea crossover interactive marketing method to allow virtual stores to market and guide real customers to bricks-and-mortar stores corresponding to the virtual stores via positioning technology and instruct the real customers to interact with the bricks-and-mortar stores.

To achieve the foregoing objective, the crossover interactive marketing method includes the step ofconnecting the server, the portable device and the terminal device to the network for communicating data. The data is sent to the server from the portable device after the positioning module is operated for positioning. The real customer is marked as a real customerin the virtual world visible in the portable device and the terminal device. Theterminal device sends the position of the real customer to the server. The bricks-and-mortar storeis marked as a virtual storein the virtual worldvisible in the portable device and the terminal device. The marketing event is sent to the virtual store in the virtual world from the server via the network. The real customeris guided to the bricks-and-mortar store in the real world corresponding to the real customer moving toward the virtual store in the virtual world visible in the portable device to allow the real customerto complete the marketing event in the bricks-and-mortar store in the real world. The portable device or the terminal device collects the positioning data and sends the data of the completed marketing event to the server. The server updates the data of the real customer in the virtual world corresponding to the real customer in the real worldor the data of the virtual store in the virtual world corresponding to the bricks-and-mortar store in the real world after the server receives the data of the completed marketing event from the portable device or the terminal device.

Other objectives, advantages and features of the present invention will be apparent from the following description referring to the attached drawings.

### BRIEF DESCRIPTION OF DRAWINGS

The present invention will be described via detailed illustration of the preferred embodiment referring to the drawings wherein:
FIG. 1 is a block diagram of a crossover interactive marking system according to the preferred embodiment of the present invention;
FIG. 2 is a perspective view of the crossover interactive marking systemshown in FIG. 1;
FIG. 3 is a front view of a portable device of the crossover interactive marking systemshown in FIG. 2;
FIG. 4 is a scheme for mapping a real-world region in the crossover interactive marking system shown in FIG. 1; and
FIG. 5 is a flow chart of a process incorporated in the crossover interactive marking system shown in FIG. 1.

### DETAILED DESCRIPTION OF PREFERRED EMBODIMENT

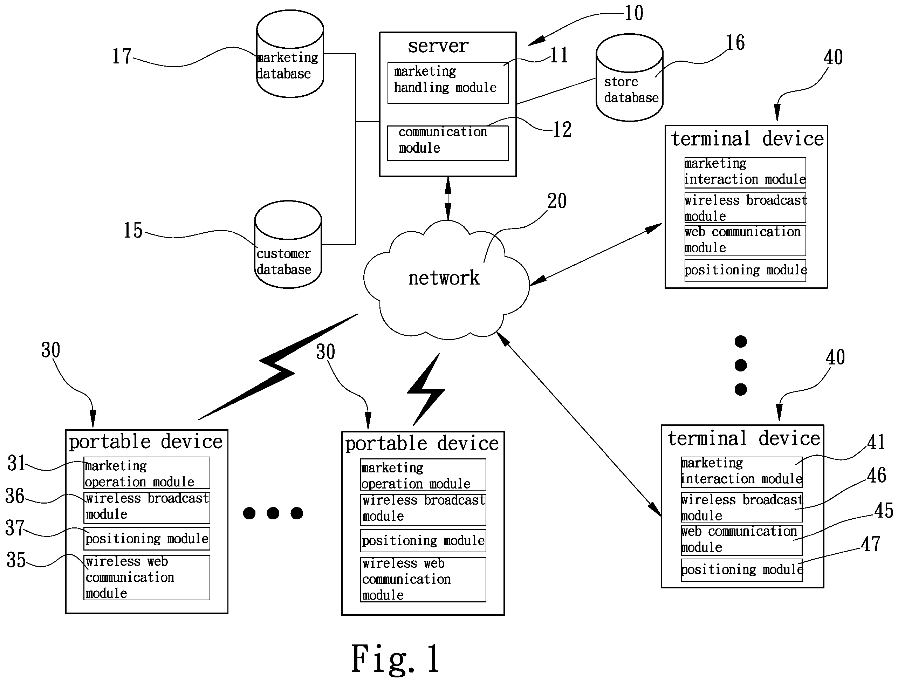

Referring to FIG. 1, a crossover interactive marketing system includes a server 10 of a platform provider, a network 20, portable devices 30 of real customers and terminal devices 40 of bricks-and-mortar stores according to the preferred embodiment of the present invention. The server 10 communicates data with the portable devices 30 and terminal devices 40 via the network 20 by cables or in a wireless manner. Thus, the real customers can find in the real world marketing events marked in virtual stores in a virtual world and react with bricks-and-mortar storescorresponding to the virtual stores. Each of the marketing events includes marketing data of a site, a mission and a reward for example. The site can be a bricks-and-mortar store or a tourist's attraction. The mission can be listening to introduction of products, testing food or advertisement for example. The reward can be a point, a coupon or a rebate.

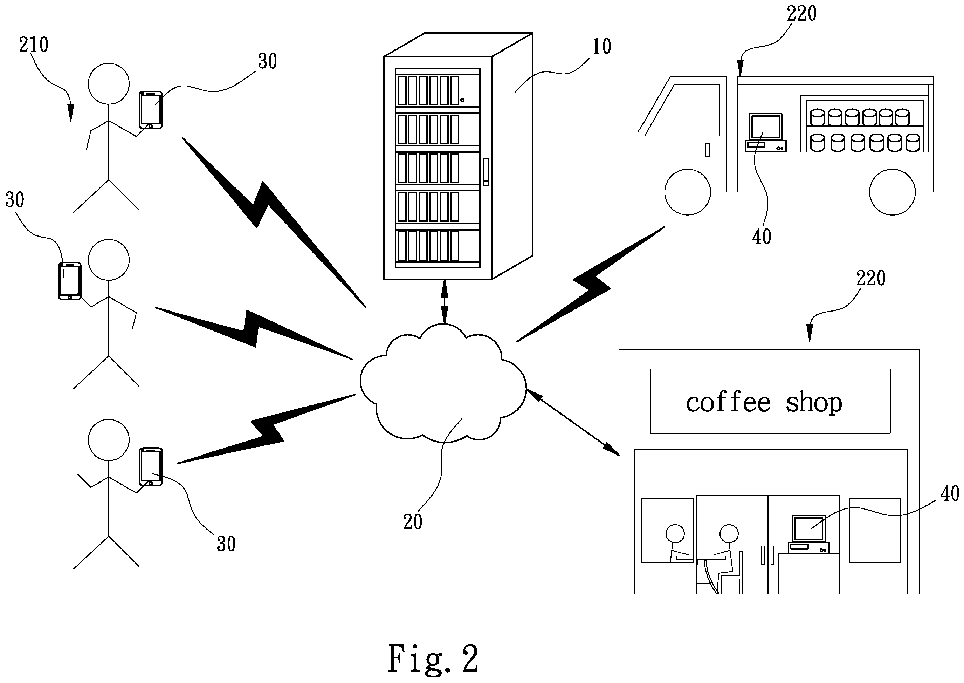

Referring to FIGS. 1 and 2, the server 10 includes a marketing processing module 11 and a communication module 12. The marketing processing module 11 is a built-in backstage program for determining, analyzing, comparing and processing data such as identitydata of the real customers, identity data of the bricks-and-mortar stores, positioning data, data of time or data of the marketing events. Via cables or in a wireless manner, the communication module 12 is connected to the network 20 to communicate the data with the portable devices 30 and/or the terminal devices 40. Furthermore, the server 10 is connected to a real customer database 15, a store database 16and a marketing database 17. The real customer database 15records data of the real customers' identities, positions, completed marketing events and rewards. The store database 16 records the data of the identities and positions of the bricks-and-mortar stores and the data of the missions and rewards for the real customers. The marketing database 17 records data of various marketing activities such as instructions for the marketing events, the rewards, distribution, changes and interaction.

Thenetwork 20 is operable via cables or in a wireless manner to allow the server 10 to communicate the data with the portable devices 30and the terminal devices 40. Preferably, the network 20 is the internet.

Each of the portable devices 30is a smart phone or atablet computer for example. Each of the portable devices 30 includes amarketing operation module 31, a wireless web communication module 35, a wireless broadcast module 36and a positioning module 37 for example.

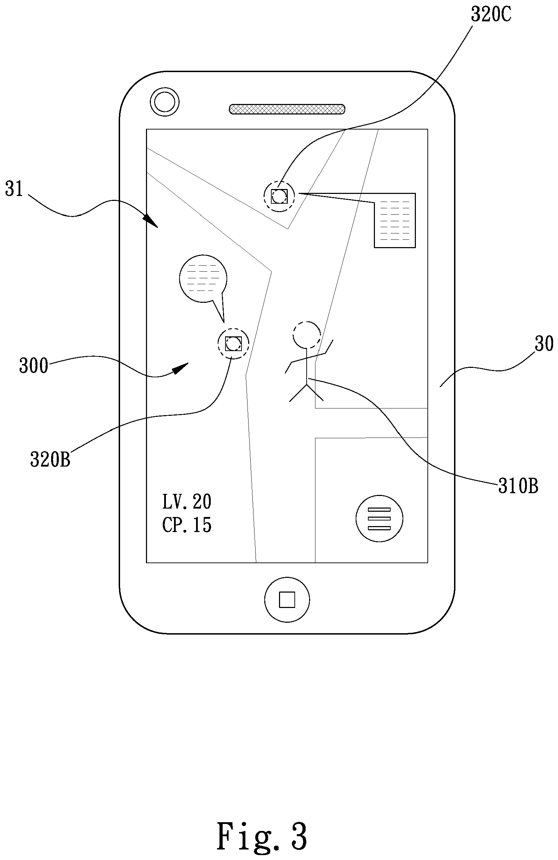

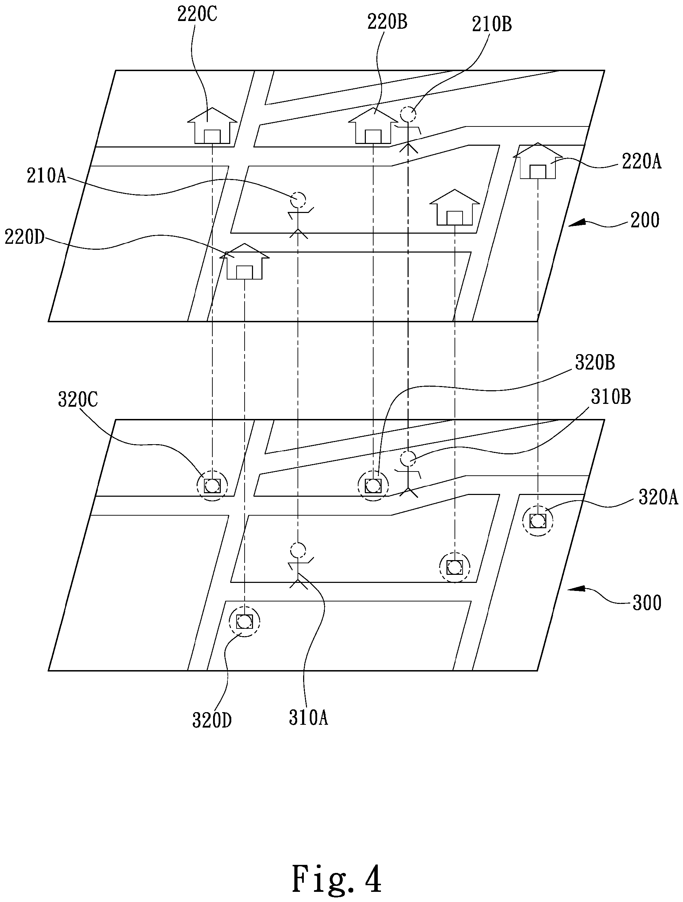

The marketing operation module 31 is an application program built in the portable device 30. Referring to FIGS. 3 and 4, the marketing operation module 31 includes an interface and a visible virtual world such as an electronic map. The virtual world is built corresponding to the real world that includes buildings and roads. Thereal customers can find in the real world sites for marketing events marked in the virtual stores in the virtual world and complete the marketing events in the real world.

The wireless web communication module 35 communicates instructions from the bricks-and-mortar stores or the data of the real customers with the server 10 via the network 20.

The wireless broadcast module 36 allows the real customers to interact with the bricks-and-mortar stores to complete the marketing events in the real world.The wireless broadcast module 36 is a sort-range communication element such as an IR communication element, ahigh frequency communication element ("NFC"), a Bluetooth communication element, an RF label, an RF label reader, a bar code, and a bar code reader (such as a camera of a smart phone and a program run in the smart phone to decode the bar codes).

The positioning module 37is made compliant to the global positioning system ("GPS") for example. The positioning module 37 and the marketing operation module 31 guide the real customers to find thebricks-and-mortar stores or tourist's attractions in the real world.

Each of the terminal devices 40is a terminal, a desktop computer or alaptop computer for example. The terminal device 40 includes a marketing interaction module 41, a web communication module45, a wireless broadcast module 46 and a positioning module 47 for example.

The marketing interaction module 41 is an application program built in the correspondingterminal devices 40. The marketing interaction module 41 includes an interface and a visible virtual world such as an electronic map. The marketing interaction module 41 is operable to set, change and record marketing events and interact with theportable device 30.

The web communication module 45 is operable to communicate with the server 10 via the network 20 to send instructions from the bricks-and-mortar stores or data of positions of the bricks-and-mortar stores.

The wireless broadcast module 46 is a short-distance communication element such as an IR communication element, a high-frequency communication element ("NFC"), a Bluetooth communication element, an RF label, an RF label reader, a bar code and a bar code reader (such as a camera of a smart phone and a program run in the smart phone to decode the bar code). Thewireless broadcast module 46 is operable for communication with the wireless broadcast module 36 to allow the real customers to interact with the bricks-and-mortar stores and complete the marketing events such as having the bar code scanned.

The positioning module 47 and the marketing interaction module 41 are operable to mark the positions of the bricks-and-mortar stores.

The crossover interactive marking system as discussed above is operable to combine the real world with the virtual world to guide the real customers to the bricks-and-mortar stores in the real world. The operation of the crossover interactive marking system will be described in detail.

Referring to FIGS. 1 and 2, the server 10 is operable to sendat least one marketing event to at least one real customer's portable device 30 from at least one virtual store in the virtual world. The positioning data in themarketing operation module 31 and the visible virtual world guide the real customer to a bricks-and-mortar storecorresponding to the virtual store to allow the real customertocomplete the marketing eventin the real world. The portable device 30 is operable to provide the server 10 with data that include the positioning data and the data of the marketing event. Thus, the server 10 is operable to effectively record, store, collect statistics and manage the marketing events completed by the real customer. Accordingly, at least one reward can be given to the real customer.

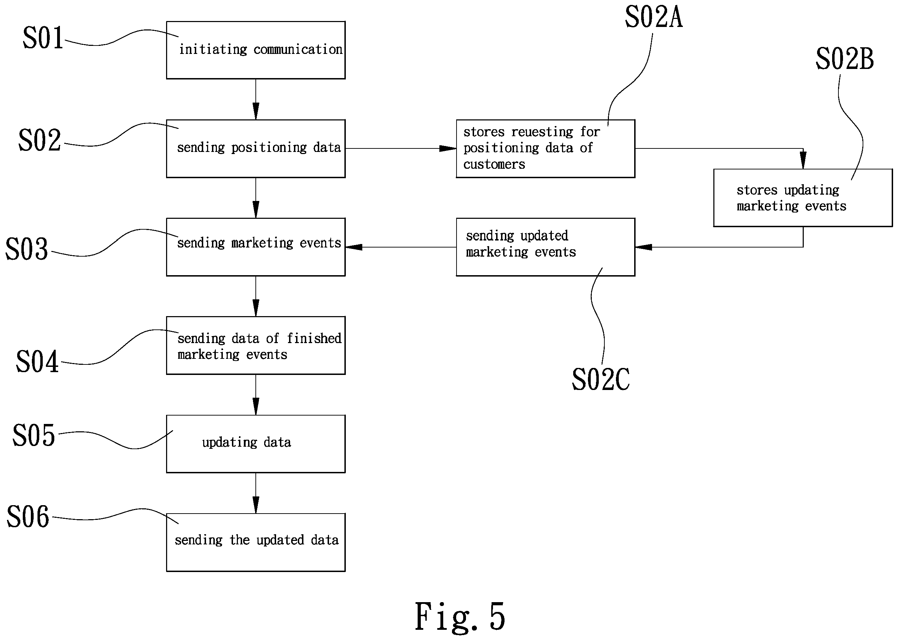

Referring to FIGS. 3 through 5, a crossover interactive marketing method executed in the crossover interactive marketing system shown in FIGS. 1 and 2 will be described.

At S01, communication is initiated. The marketing processing module 11 of the server 10 is turned on. In the real world200, real customers 210A and 210B turn on the marketing operation modules 31 of their portable devices 30 according to their needs, and bricks-and-mortar stores 220A to 220D turn on the marketing interaction modules 41 of their terminal devices 40 according to their needs. The wireless web communication modules 35 of the activated portable devices 30 and the web communication modules 45 of theactivatedterminal devices 40 communicate data with the communication module 12 of the server 10 via the network 20.

At S02, positioning data are communicated. The positioning modules 37 of theportable devices 30 of the real customers 210A and 210B position and mark the real customers 210A and 210B in the real world 200 as real customers 310A and 310B in the virtual world 300 that is visible in themarketing processing modules 11 of the portable devices 30and themarketing interaction modules 41 of the terminal devices 40. Then, the identity data and the positioning data of the real customers 210A and 210B are sent to the server 10 from the portable devices 30 via the network 20. The server 10 receives these data to have the marketing processing module 11 process these data. If the bricks-and-mortar stores 220A, 220B, 220C and 220D are stationary stores, the terminal devices 40 thereof send their positions to the server 10 via the network 20 and mark the bricks-and-mortar stores 220A, 220B, 220C and 220D as the virtual stores 320A, 320B, 320C and 320D in the virtual world 300, which is visible in the marketing processing modules 11 and the marketing interaction modules 41. If the bricks-and-mortar stores220A, 220B, 220C and 220D are movable stores, the positioning modules 47 of the terminal devices 40 position the bricks-and-mortar stores220A, 220B, 220C and 220D and send their positioning data to the server 10 and mark thebricks-and-mortar stores 220A, 220B, 220C and 220D as the virtual stores 320A, 320B, 320C and 320D in the virtual world 300.

At S03, marketing events are assigned and sent. After receiving the positioning data from the portable devices 30 of the real customers 210A and 210B, the server 10 uses the marketing processing module 11 to analyze and compare the positioning data with the data in the real customer database 15, the store database 16 and the marketing database 17. Via the network 20, the server 10 sends marketing events and marks the marketing eventsin the virtual stores 320A, 320B, 320C and 320D in the virtual world 300B visible in the marketing processing modules 11 of theportable devices 30 of the real customers 210A and 210. Each of the marketing events includes a position, a mission to be executed and a reward for executing the mission for example. The site is a bricks-and-mortar store or a tourist's attraction for example. The missionis listening to the instruction of at least one product, testing food, consuming or advertisement for example. The reward can be at least one point, coupon or rebate.

At S04, data of completedmarketing events are sent. The real customers 210A and 210B move inthe real world 200 corresponding to the virtual world 300 visible in the marketing processing modules 11 of the portable devices 30. The positioning modules 37 of the portable devices 30 continues to position, update the positions, and move the real customers 310A and 310B toward the virtual stores 320A, 320B, 320C and 320D of the virtual world 300. Finally, the real customers 210A and 210B reach the corresponding bricks-and-mortar stores 220A, 220B, 220C and 220D in the real world 200, and complete the marketing events. Moreover, to confirm the completion of the marketing events, the wireless broadcast modules 36 of the portable devices 30 of the real customers 210A and 210B read the wireless broadcast modules 46 of the terminal devices 40 of thebricks-and-mortar stores 220A, 220B, 220C and 220D, e.g., RF or bar code readers read RF labels or bar codes. Then, the portable devices 30 or the terminal devices 40 collect the positioning data and send the data of the completed marketing event to the server 10.

At S05, the data are updated. After receiving the data of the completed marketing events from the portable devices 30 of the real customers 210A and 210B or the terminal devices 40 of the bricks-and-mortar stores 220A, 220B, 220C and 220D in the real world 200, the marketing processing module 11 of the server 10 collects, analyzes and manages the data. Accordingly, the marketing processing module 11 of the server 10 updates the data of the real customers 310A and 310B in the virtual world 300 corresponding to the real customers 210A and 210B or the data of the virtual stores 320A, 320B, 320C and 320D in the virtual world 300 corresponding to the bricks-and-mortar stores 220A, 220B, 220C and 220D. Furthermore, the data are recorded in the real customer database 15, the store database 16 or the marketing database 17 of the server 10.

At S06, the updated data are sent. The server 10 sends the data of the real customers 310A and 310B or the virtual stores 320A, 320B, 320C and 320D according to requests from the real customers 210A and 210B by the portable devices 30 or according to requests from the bricks-and-mortar stores 220A, 220B, 220C and 220D via the terminal devices40 in the real world 200. Moreover, the data are shown on themarketing processing modules 11 of the portable devices 30 of the real customers 210A and 210B or the marketing interaction modules 41 of the terminal devices 40 of the bricks-and-mortar stores 220A, 220B, 220C and 220D. Thus, the real customers 210A and 210B can consume in the real world 200and enjoy special offers from the bricks-and-mortar stores 220A, 220B, 220C and 220D according to the rewards given to the real customers 310A and 310B. The server 10 returns the process to S05after the consumption.

With the above-discussed process, the real customers inthe real world usethereal customers shown in the virtual world to find the marketing events marked in the virtual stores or sites, and complete the marketing events in the corresponding bricks-and-mortar stores or locates in the real world. Moreover, the data of the completed marketing events are recorded in the corresponding real customers so that the corresponding real customers can receive the rewards or the special offers from the bricks-and-mortar stores in the real world. Thus, the consumers are guided to the bricks-and-mortar stores, and the effects of marketing are increased.

Referring to FIGS. 3 through 5, the crossover interactive marketing method includes steps between S02 and S03. At S02A, the bricks-and-mortar stores request for the positioning data of the real customers. In the real world 200, the bricks-and-mortar stores 220A, 220B, 220C and 220D use the marketing interaction modules 41 of the terminal devices 40 to request the server 10 for data of the real customers 210A and 210B in a certain area via the network 20. The server 10 sends the requested data to the bricks-and-mortar stores220A, 220B, 220C and 220D and shows the requested data on themarketing interaction modules 41 of the terminal devices 40 inthe virtual world 300. Thus, the bricks-and-mortar stores 220A, 220B, 220C and 220D are allowed toreach the data of the real customers 310A and 310B including the number and their preference of consumption.

At S02B, the bricks-and-mortar stores can update the marketing events. Thebricks-and-mortar stores 220A, 220B, 220C and 220D use the marketing interaction modules 41 to update the marketing events according to the latest data of the real customers 210A and 210B.

At S02C, the updated marketing events are sent. The bricks-and-mortar stores 220A, 220B, 220C and 220D send the updated marketing events to the server 10 via the terminal device 40. Thus, the server 10 send the updated marketing events (S03), and attract the real customers 210A and 210B in the certain area in the real world 200 to the bricks-and-mortar stores 220A, 220B, 220C and 220D to complete the marketing events. Hence, the effects of marketing are increased.

The present invention has been described via the illustration of the preferred embodiment. Those skilled in the art can derive variations from the preferred embodiment without departing from the scope of the present invention. Therefore, the preferred embodiment shall not limit the scope of the present invention defined in the claims.

## Claims

1. A crossover interactive marketing system comprising
a network (20);
a platform provider's server (10) comprising a marketing processing module (11) for running a back-stage program to process data and execute functions, a communication module (12) in communication of data with the network (20), a real customer database (15) for recording identity data of at least one real customer, a store database (16) for recording identity data of at least one bricks-and-mortar store, and a marketing database (17) for recording at least one marketing event;
at least one real customer's portable device (30) comprising a marketing operation module (31) for running an application program to execute functions and show a virtual world (300), a wireless web communication module (35) in communication of data with the server (10) via the network (20), a wireless broadcast module (36) for interacting with the bricks-and-mortar store to complete the marketing event, and a positioning module (37) for positioning the real customer in the real world (200);
at least one bricks-and-mortar store's terminal device (40) comprising a marketing interaction module (41) for running an application program to execute functions and show the virtual world (300), a web communication module (45) in communication of data with the server (10) via the network (20), and a wireless broadcast module (46) for interaction with the real customer to complete the marketing event;
wherein the server (10) is connected to the portable device (30) and the terminal device (40) via the network (20) to allow the real customer to find in the real world (200) the marketing event marked in the virtual world (300) to allow the real customer to interact with the bricks-and-mortar store to complete the marketing event in the real world (200).

2. The crossover interactive marketing system according to claim 1, wherein the portable device (30) is selected from the group consisting of a smart phone and a tablet computer.

3. The crossover interactive marketing system according to claim 1, wherein each of the wireless broadcast modules (36, 46) is selected from the group consisting of an IR communication element, a high-frequency communication element, a Bluetooth communication element, a RF label, and a RF label reader, a bar code and a bar code reader.

4. The crossover interactive marketing system according to claim 1, wherein the terminal device (40) comprises a positioning module (47) for positioning a movable bricks-and-mortar store.

5. A crossover interactive marketing method for operating the crossover interactive marketing system according to claims 1 to 4 comprising the steps of:
initiating communication of data by connecting the server (10), the portable device (30) and the terminal device (40) to the network (20);
sending the positioning data by using the positioning module (37) for positioning, sending the positioning data to the server (10) from the portable device (30), marking the real customer as a real customer in the virtual world (300) visible in the portable device (30) and the terminal device (40), using the terminal device (40) to send the position of the real customer to the server (10), and marking the bricks-and-mortar store as a virtual store in the virtual world (300) visible in the portable device (30) and the terminal device (40);
sending the data of the completed marketing event to the virtual store in the virtual world (300) from the server (10) via the network (20);
guiding the real customer to the bricks-and-mortar store in the real world (200) corresponding to the real customer moving toward the virtual store in the virtual world (300) visible in the portable device (30) to allow the real customer to complete the marketing event in the bricks-and-mortar store in the real world (200), and using the portable device (30) or the terminal device (40) to collect the positioning data and send the data of the completed marketing event to the server (10); and
using the server (10) to receive the data of the completed marketing event from the portable device (30) or the terminal device (40) and update the data of the real customer in the virtual world (300) corresponding to the real customer in the real world (200) or the data of the virtual store in the virtual world (300) corresponding to the bricks-and-mortar store in the real world (200).

6. The crossover interactive marketing method according to claim 5, further comprising, after the step of using the server to update the data, the step of using the server (10) to send the updated data of the real customer or the virtual store according to a request from the real customer or the bricks-and-mortar store in the real world (200), thereby allowing the real customer in the real world (200) to receive a special offer from the bricks-and-mortar store in the real world (200) according to the reward for the real customer from the virtual store.

7. The crossover interactive marketing method according to claims 5 and 6, further comprising, between the step of sending the positioning data and the step of sending the data of the completed marketing event, the steps of:
using the terminal device (40) to request, via the network (20), the server (10) for real customers in a certain area, and showing real customers in the virtual world (300) corresponding to the real customers in the real world (200) after the server (10) sends the requested data to the terminal device (40), thereby allowing the bricks-and-mortar store in the real world (200) to access to preferences and data of the real customer;
updating the marketing event according to the data of the real customers; and using terminal device (40) of the bricks-and-mortar store to send the updated marketing event to the server (10).
